# EUROPÄISCHE PATENTSCHRIFT

(11) **EP 2 095 488 B1**
(45) Veröffentlichungstag und Bekanntmachung des Hinweises auf die Patenterteilung: **31.03.2010**
(21) Anmeldenummer: 07857031.4
(22) Anmeldetag: 21.12.2007
(51) Int. Cl.: H02K 1/27, H02K 16/02

(54) **SYNCHRONE PERMANENTMAGNETMASCHINE**
SYNCHRONOUS PERMANENT MAGNET MACHINE
MACHINE SYNCHRONE À AIMANTS PERMANENTS

(30) Priorität: 29.12.2006 DE 102006062613
(43) Veröffentlichungstag der Anmeldung: 02.09.2009
(73) Patentinhaber: Thoms, Michael, 74321 Bietigheim-Bissingen (DE)
(72) Erfinder: Thoms, Michael, 74321 Bietigheim-Bissingen (DE)
(74) Vertreter: Mörtel & Höfner
(86) Internationale Anmeldenummer: PCT/EP2007/011308
(87) Internationale Veröffentlichungsnummer: WO 2008/080575

(56) Entgegenhaltungen:
- EP-A- 1 024 585
- EP-A- 1 087 501
- WO-A-99/39426
- US-A1- 2004 119 373
- US-A1- 2006 066 173

## Beschreibung

Die vorliegende Erfindung betrifft eine synchrone Permanentmagnetmaschine. Bekannt sind elektrische Motoren, bei denen nach Art der Deutschen Patentschrift 199 03 977 die Primärdrehzahl der Motorwelle durch nachgeordnete Getriebe herab- oder heraufgesetzt wird. Da bei diesen nachgeordneten Getrieben mechanische Teile im Eingriff stehen, unterliegen diese einem störenden Verschleiß. Die vorliegende Erfindung stellt sich die Aufgabe, ohne ein Getriebe in einer in einer elektrischen Maschine mindestens zwei Drehzahlen bei kompaktem Aufbau zu erzeugen.

Nach der DE 600 24 383 T2 ist es bei einer aus zwei mit Permanentmagneten bestückten Läufern versehenen Synchronmaschine bekannt, die Spulen der beiden Ständerwicklungsgruppen unabhängig voneinander zu bestromen. Nach der WO 99/39426 A ist es bekannt, die Ankerwicklungen mit zwei Drehfeldkomponenten, entsprechend 2 Frequenzen, zu beaufschlagen.

In der Technik haben die erfindungsgemäßen Motoren mit 2 Drehzahlen ein weites Anwendungsgebiet. So können sie beispielsweise zur Unterdruckerzeugung und Trennung von Luft-/Flüssigkeit-/Feststoffgemischen vorteilhaft eingesetzt werden. Hier ist bekannt, dass zur Erzeugung eines Unterdrucks von z.B. 160 mbar mit Hilfe eines Radialgebläses hohe Drehzahlen von ca. 10.000 bis 15.000 U/min erzeugt werden müssen. Möchte man gleichzeitig durch einen Zentrifugalabscheider den Feststoffanteil von dem Flüssigkeitsteil und diesen wiederum von dem Luftanteil trennen sind hingegen Drehzahlen in der Größenordnung von 4.000 U/min notwendig, damit z. B. in dem Abscheider ein Aufschäumen des Gemisches verhindert wird, welches von einer nachgeordneten Saugmaschine sonst angesaugt würde. Bislang wurden derartige Maschinen mit 2 getrennten Motoren aufgebaut. Durch den erfindungsgemäßen Motor mit 2 Drehzahlen ist es möglich, diese Maschinen kostengünstiger und kompakter aufzubauen.

Gelöst wird diese Aufgabe mit den im Hauptanspruch angegebenen Maßnahmen. Weitere Ausgestaltungen der Erfindung sind in Unteransprüchen niedergelegt und sollen an Hand der Figuren näher veranschaulicht werden.
Fig.1 bis Fig. 3 zeigen beispielhaft die Erfindung an einem 3-phasig angesteuertem Wicklungspaket mit einem 2-poligem und einem 6-poligem permanentmagnetischem Rotor,
Fig.4 und Fig. 5 zeigen eine Rotorausführung, welche in Bezug auf die der niedrigen Drehzahl zugeordneten Glocke nur mit einem einzigen Magneten auskommt,
während das Schnittbild gemäß Fig. 6 den allgemeinen Aufbau der Erfindung erkennen lässt,
Fig. 7 und Fig.8 zeigen die Statorbewicklungen bei einem LRK-Motor und
Fig. 9a und 9b stellen Einzelheiten für die Ansteuerung der Statorspulen dar.

Synchronmotoren mit Stator und permanentmagnetischem Rotor haben eine Drehzahl f_{M}, die durch die Ansteuerfrequenz der Wicklungen f_{w} multipliziert mit 2/p gegeben ist, wobei p die magnetische Polzahl des Läufers ist. Hieraus folgt theoretisch, dass bei jeweiliger Wahl der Polzahl p des Rotors unterschiedliche Drehzahlen erzeugt werden können.

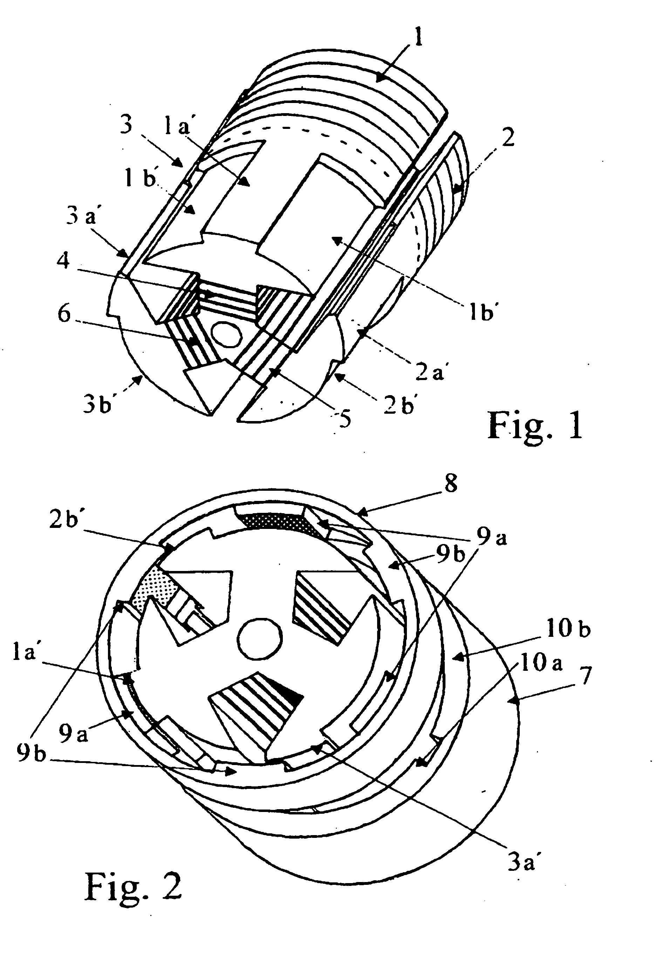

Fig. 1 zeigt zunächst den Stator eines 3-phasig angesteuerten Wicklungspakets, welches zur Verhinderung von Wirbelströmen in üblicher Weise aus einzelnen Statorblechen aufgebaut ist, von denen nur einige am hinteren Ende dargestellt sind. Es besteht aus den Jochen 1, 2 und 3 sowie den Jochen 1a', 2a' und 3a'. Das Joch 1a' ist in der Mitte des Joches 1 ausgebildet und entsteht durch Aussparungen (1b') an den Enden des Joches 1. Durch diese Aussparungen wird der effektive Luftspalt vergrößert, so dass Magnetfluss nur im Bereich des Pols 1a' übertritt. Dasselbe gilt für die Poljoche 2a' und 3a'. Dabei beträgt der Winkel zwischen dem mittleren Joch 1a' und den diesem benachbarten Jochen 2a' bzw. 3a' weniger als 120°. Eine dreiphasige Wicklung, bestehend aus den mit 4, 5 und 6 bezeichneten Wicklungssträngen umschließt den Stator, welcher sich über den gesamten Rotor erstreckt.

Der Teilschnitt nach Fig. 2 zeigt das Statorwicklungspaket in teilweise eingebautem Zustand, indem es von zwei rotierenden Glocken 7 und 8 umschlossen ist. Am Innenrand der weichmagnetischen Glocke 7 ist mindestens ein Permanentmagnet 10a eingeklebt, beispielweise ein nach innen wirksamer Nordpol, während sich der dazugehörige Südpol auf der Innenseite der weichmagnetischen Glocke 7 sich durch magnetische Influenz ergibt. Dasselbe gilt für die der niedrigeren Drehzahl zugeordnete weichmagnetische Glocke 8. Hier sind wiederum drei nach der Innenseite der weichmagnetischen Glocke 8 wirksamen Nordpole 9a eingeklebt und die zugeordneten Südpole 9b, welche jeweils um 60° gegenüber den Magnetpositionen verschoben sind, entstehen durch magnetische Influenz.

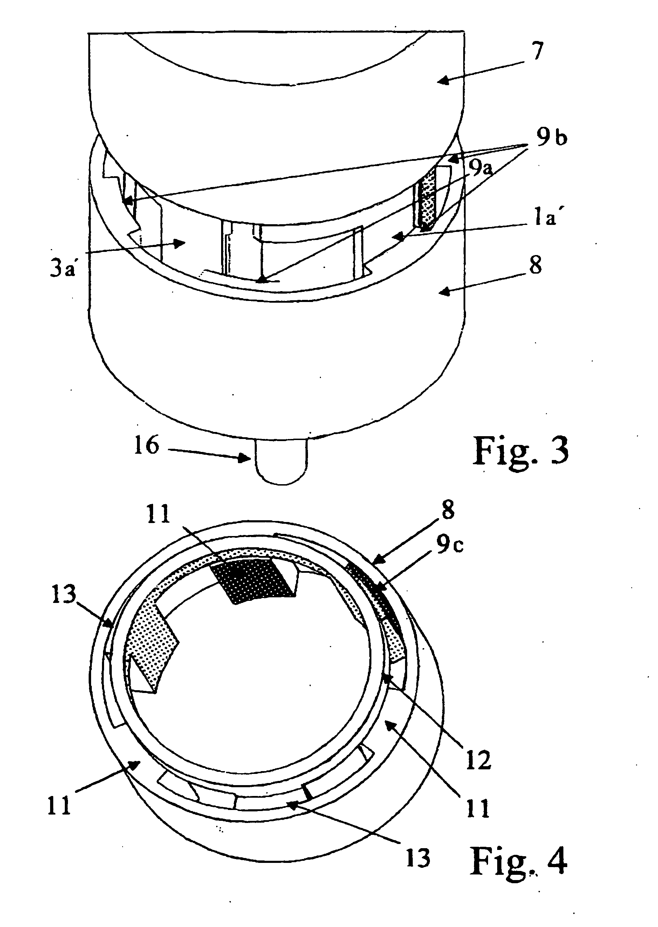

Fig. 3 zeigt Stator und Rotor in zusammen gebautem Zustand, woraus auch die der niedrigeren Drehzahl zugeordnete, mit der weichmagnetischen Glocke 8 fest verbundene, Welle 16 hervorgeht. Bemerkenswert ist, dass man es hier mit einer Anordnung zu tun hat, welche nur 4 Permanentmagnete insgesamt aufweist und dabei zwei Drehzahlen abgibt.

In der Fig. 4 ist ein Querschnitt durch eine der niedrigen Drehzahl zugeordnete weichmagnetische Glocke 8 gezeigt, welche nur mit einem einzigen Permanentmagneten 9c auskommt. Diester Permanentmagnet 9c liegt beispielsweise mit seinem Südpol am inneren Umfang der weichmagnetischen Glocke 8 an, die ihrerseits in 3 um jeweils 120° versetzte kreisförmigen Segmenten 11 enden und dort ebenfalls Südpole durch magnetische Influenz hervorrufen.. Der Nordpol dieses Permanentmagneten 9c liegt an einer Lasche eines weichmagnetischen Ringes 12 an, der zwei um 120° bzw. 240° versetzte Laschen aufweist, welche sich auf nichtmagnetische Unterfütterungselemente 13 gegen die Innenseite der weichmagnetischen Glocke 8 abstützen.

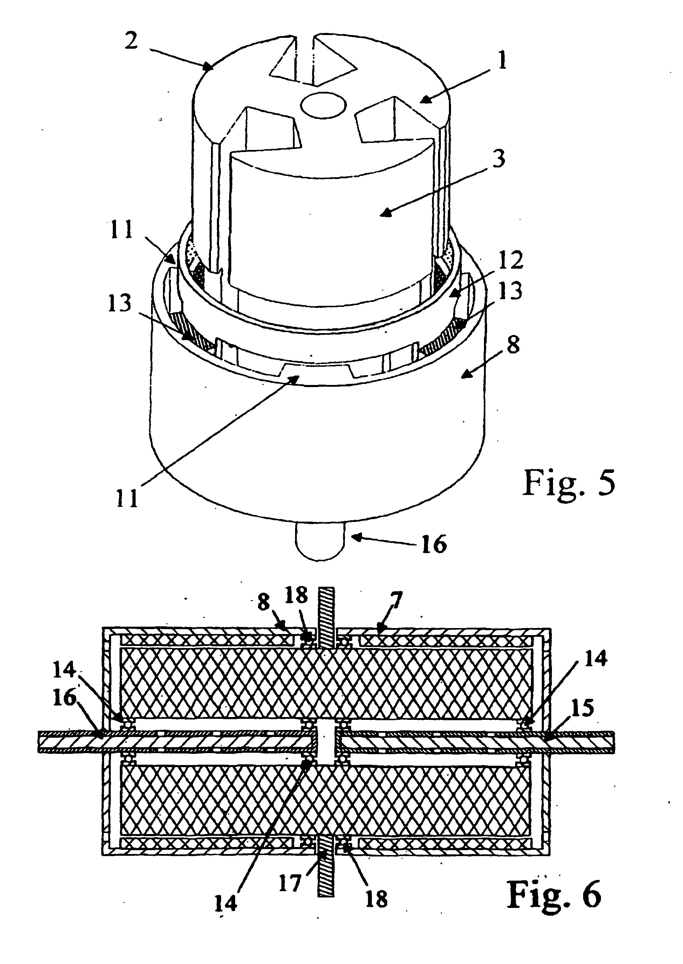

Fig. 5 zeigt eine Darstellung des Stators mit den Jochen 1, 2 und 3 bei übergeschobener weichmagnetischer Glocke 8. Man erkennt die Segmente 11, den weichmagnetischen Ring 12 mit seinen Laschen sowie die nichtmagnetischen Unterfütterungselemente 13.

Fig. 6 stellt an einem Längsschnitt den prinzipiellen Aufbau dar. Am statorseitigen Blechpaket ist der Flansch 17 fixiert, so dass an ihm der gesamte Motor befestigt ist. Die als Hohlwellen ausgeführten Wellen 15 und 16 sind mittels der in das Blechpaket eingepressten Kugellager 14 drehbar gelagert. Mit diesen sind die rotorseitigen Glocken 7 und 8 fest verbunden. Zur Reduktion der Verkippung kann es vorteilhaft sein, die Glocken 7 und 8 durch zwei weitere Lager 18, welche außen auf dem Blechpaket sitzen, abzustützen. Die Hohlwellen 15 und 16 weisen mindestens eine Reihe von Bohrungen auf, denen entsprechende Öffnungen innen am Nutengrund des Stators zugeordnet sind und in Verbindung mit an den ebenen Flächen im Bereich zwischen den Magnetsegmenten der Glocken vorgesehenen weiteren Öffnungen der Belüftung der Statorwicklungen 4, 5 und 6 dienen. Es ist zweckdienlich, zur Vergrößerung der Pumpleistung die Statorjoche 1, 2 und 3 bzw. 1a', 2a' und 3a' sowie die Rotormagnete derartig spiralförmig auszubilden, dass mit steigender Höhe der Glocke auch der Winkel zunimmt, unter welchem ein Magnet in die Glocke geklebt wird. Ebenso nimmt der Winkel, unter welchem die Blechpakete und damit auch die Statorjoche zueinander montiert sind, linear zu. Aus der Fig. 6 geht auch hervor, wie man diese Anordnung auch für 3 oder 4 Wellen ertüchtigen kann: Es bedarf hierzu lediglich einer zusätzlichen Kugellagerung auf den Wellen 15 und 16, die auf ihren anderen Seiten die neuen Glocken aufnehmen, auf welche dann die Statorwicklumgen wirken. Statt zusätzlicher Kugellager könnten die neuen Glocken auch einfach auf die Wellen 15 und 16 geschoben werden.

Seit 2001 gibt es für den Flugmodellbau eine neue Art von Elektromotor, den sogenannten L(Lucas)R(Retzbach)K(Kühlfuß) - Motor in Außenläuferbauweise, welcher 6 bzw. 12 bewickelte Statorzähne aufweist. LRK-Motore haben ein hohes Drehmoment, ein leises Laufgeräusch und einen hohen Wirkungsgrad. Zudem sind diese Motoren nahezu verschleißfrei. Angesteuert werden diese Motoren mit einem Brushless- Regler, der die Gleichspannung eines Antriebsakkus in eine Drei-Phasen-Wechselspannung wandelt.

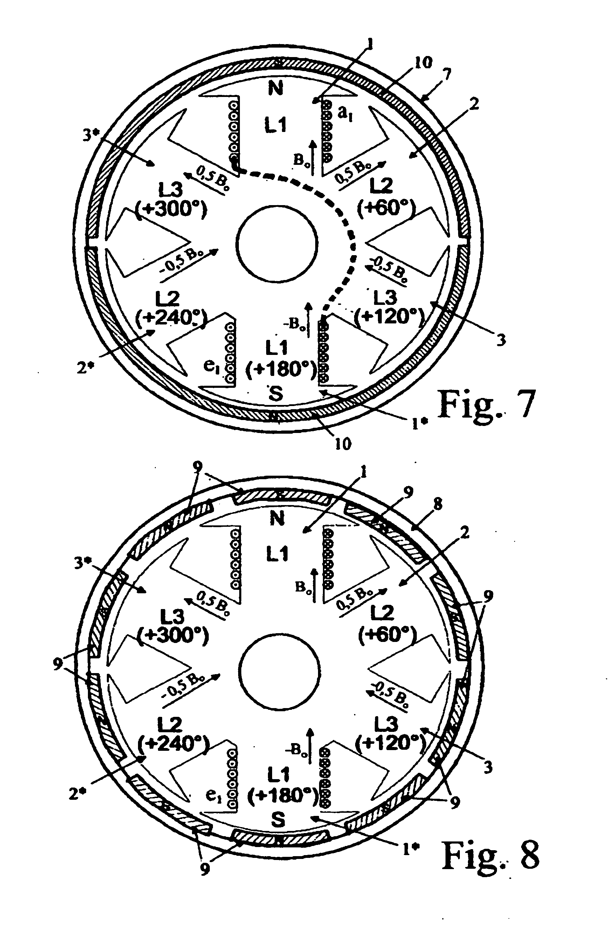

Für die Zwecke der Erfindung eignen sich derartige Antriebe hervorragend, da die Statorankergeometrie unter beiden Glocken gleich bleiben kann und beliebige Drehzahlunterschiede realisiert werden können. In den Fig. 7 und 8 sind zwei Querschnitte durch einen LRK-Motor dargestellt. So entspricht Fig. 7, welche eine Glocke mit jeweils einem Nordpol und einem Südpol aufweist, dem der höheren Drehzahl zugeordneten Wellenende, während die Fig. 8 mit jeweils 5 Nord- und Südpolen dem Wellenende mit der niedrigeren Drehzahl entspricht. Bei den Ständerzähnen 1 und 1* ist der Wicklungssinn zwischen den mit a₁ und e₁ bezeichneten Wiklungsenden angedeutet: eine mit einem Punkt markierte Pfeilspitze bedeutet einen aus der Zeichenfläche heraustretenden und ein mit einem Kreuz versehenes Pfeilende gibt ein in die Zeichenfläche hineintretenden Stromfluß wieder. Für die Statorzähne 2 und 2* sowie 3 und 3* gilt für die Wicklungsenden a₂ und e₂ sowie a₃ und e₃ entsprechendes. Die Anker der Motoren sind vollkommenen gleich ausgeführt, d.h. die Absätze 1 b', 2b' und 3b' im Bereich der langsamer drehenden Glocke entfallen.

Die Wicklungen der einzelnen Ankersegmente sind so ausgeführt, dass die von ihnen erzeugte Magnetisierungen in den Zähnen 1 und 1* radial gesehen entgegengesetzt sind. Entsprechendes gilt für die Zähne 2 und 2* sowie die Zähne 3 und 3*. Wird die dem Zahn 1 zugeordnete Wicklung maximal durchflutet, so entsteht am Zahn 1 ein magnetischer Nordpol mit einer Flußdichte der Stärke B₀, am Zahn 1* dagegen ein magnetischer Südpol mit einer Flußdichte der Stärke -B₀. Die anderen Ankerwicklungen sind mit den beiden anderen Phasen des Drehstroms so beschaltet, dass im gleichen Moment die Flußdichte sich für die anderen Zähne im Uhrzeigersinn mit cos(θ) verändert, also beispielsweise im Zahn 2 die Flußdichte B₀cos(60°) = 0,5B₀ und im Zahn 3 die Flußdichte B₀cos( 120°) = -0,5B₀,

Dreht sich nun die Stromphase um 60°, so wird der Zahn 2 zum Nordpol mit einer Flußdichte der Stärke B₀, so dass sich die 2-polige Glocke 7 in Fig. 7 aufgrund der Anziehungskräfte des Permanentmagneten 10 um 60° dreht. Bei Drehung der Phase um 360° hat die Glocke 7 ebenfalls eine vollständige Drehung um 360° ausgeführt. Damit entspricht die Drehzahl der 2-poligen Glocke 7 der Drehzahl des Wechselstromes. Die 10-polige Glocke gemäß Fig. 8 hingegen führt jedoch eine Drehbewegung mit um den Faktor 5 niedrigerer Drehzahl aus. Wird nämlich zum Zeitpunkt der Stromphase von 60° der Zahn 2 zum Nordpol mit einer Flußdichte der Stärke B₀, dann wird der Glockenmagnet in der 72° Stellung auf den Winkel von 60° gezogen, und die Glocke dreht sich nur um 60° - 72° = -12°, also links herum. Dreht sich die Phase des Drehfeldes um 360°, dann dreht sich die Glocke um -6x12= -72°, so dass der sich der zu Beginn der Betrachtung in der 72° Stellung befindliche Glockenmagnet sich jetzt in der Nullstellung befindet. Verwendet man z.B. eine 14-polige Glocke, dann befindet sich alle 360°/14 = 25,7° ein Magnet auf der Glocke und alle 360°/7 = 51,4° ein Magnet gleicher Polarisierungsrichtung. Bei dieser Ausgestaltung ist die Drehzahl um den Faktor 7 herabgesetzt.

Anstatt bei der Anordnung nach Fig. 7 eine Glocke mit 2 magnetischen Polen einzusetzen, kann man auch Glocken mit größerer Polzahl verwenden. Zusammen mit der in Fig. 8 gezeigten Ausführung, welche gegebenenfalls auch eine n-polige Glocke aufweist, ergibt sich damit eine beliebig stufige Drehzahlüber- bzw. Drehzahluntersetzung.

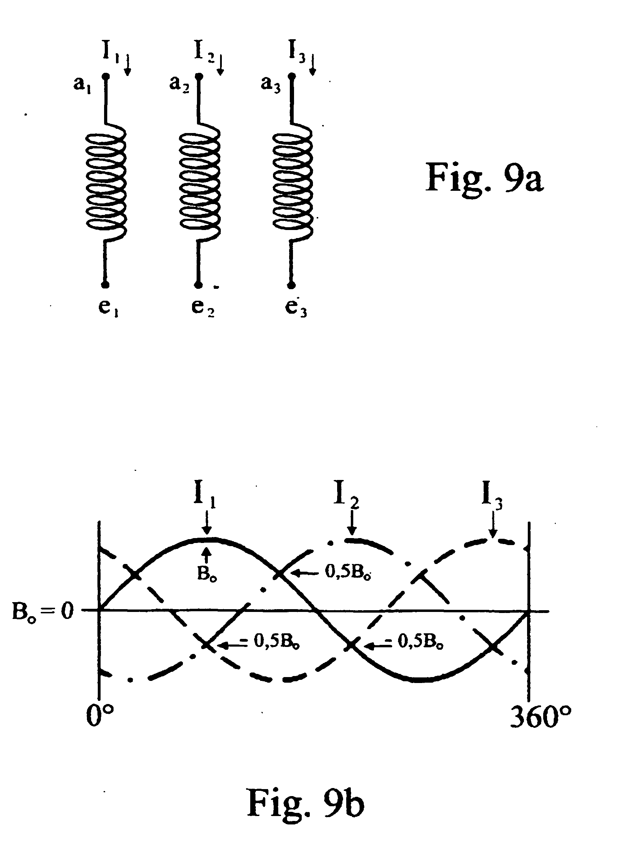

Die Figuren 9a und 9b zeigen Einzelheiten zur Ansteuerung der einzelnen Wicklungen, wobei mit a₁ (a₂, a₃) der Wicklungsanfang und mit e₁ (e₂ , e₃) das Wicklungsende der ersten (zweiten und dritten) Wicklung bezeichnet sind. Für die entsprechenden Ströme gilt dasselbe. Diese Phasenbeziehungen könnte entweder durch den Anschluss an ein übliches Dreiphasennetz erzielt werden oder aber wie beim vorerwähnten LRK-Motor mit einem Brushless-Regler, welcher die Gleichspannung eines Antriebsakkus in eine Drei-Phasen-Wechelspannung wandelt. Damit kann ein mobiler, von einem Dreiphasennetz unabhängiger, Doppelmotorantrieb verwirklicht werden. Schließt man die Wicklungen kurz, bzw. verbindet sie über einen niedrigohmigen Widerstand so ergibt sich ein elektrisches Getriebe, in dem man eine Welle antreibt und dann am anderen Wellenende die entsprechend über- bzw. untersetzte Drehzahl abnimmt.

## Patentansprüche

1. Synchrone Permanentmagnetmaschine mit einem einzigen Stator und mit mindestens zwei Rotoren für mindestens zwei Drehzahlen, wobei für jede Drehzahl ein Rotor, sowie in jedem der Rotoren Permanentmagnete von unterschiedlicher Polzahl vorhanden sind, wobei der einzige Stator sich über alle Rotoren erstreckende Statorwicklungen aufweist, **gekennzeichnet durch** Mittel zum Beaufschlagen der Ankerwicklungen mit einem Drehfeld gleicher Frequenz.

2. Vorrichtung nach Anspruch 1, **dadurch gekennzeichnet, dass** mindestens ein Permanentmagnetsegment und maximal p/2 Permanentmagnetsegmente gleicher Polarität durch Segmente aus dia- oder ferromagnetischem Material hoher Permeabilität ersetzt sind, wobei p der Polzahl des Rotors entspricht.

3. Vorrichtung nach Anspruch 1 oder 2 für einen Rotor in Außenläuferbauweise, **dadurch gekennzeichnet, dass** die der niedrigen Drehzahl zugeordnete 2n-polige Glocke einen einzigen Magneten (9c) aufweist, der einerseits mit der weichmagnetischen Glocke (8) verbunden ist, welche in n regelmäßig versetzten Jochen endet und andererseits an der Lasche eines weichmagnetischen Ringes (12) anliegt, der n-1 weitere Laschen unter 360/n° aufweist, welche sich auf nichtmagnetische Unterfütterungselemente (13) gegen die Glockeninnenseite abstützen.

4. Vorrichtung nach einem der vorherigen Ansprüche **dadurch gekennzeichnet, dass** die mit den Glocken verbundenen Wellen als Hohlwellen (15,16) mit mindestens einer Reihe von Bohrungen ausgeführt sind und dass Mittel zur Belüftung der Statorwicklungen (4, 5, 6) vorgesehen sind.

5. Vorrichtung nach Anspruch 4, **dadurch gekennzeichnet, dass** bei den Statorjochen die Bereiche (1b', 2b' und 3b'), in denen diese zurückspringen, mit unmagnetischem Material aufgefüttert ist.

6. Vorrichtung nach einem der vorherigen Ansprüche, **dadurch gekennzeichnet, dass** die Statorjoche und die Rotormagnete spiralförmig gestaltet sind.

7. Vorrichtung nach einem der vorherigen Ansprüche, **dadurch gekennzeichnet, dass** der Stator so beschaltet ist, dass er jeweils auf seiner gegenüberliegenden Seite dieselbe absolute Magnetisierung aufweist.

8. Vorrichtung nach einem der vorherigen Ansprüche 1 bis 7, **dadurch gekennzeichnet, dass** die Statorwicklungen kurz geschlossen bzw. durch einen niedrigohmigen Widerstand verbunden sind.

9. Kombination der Vorrichtung nach einem der vorherigen Ansprüche mit einer Radialsaugmaschine mit Zentrifugalabscheider, der auf der niedrigdrehenden Seite montiert ist, während ein Radiallüfterrad auf der hochdrehenden Seite montiert ist.

10. Kombination der Vorrichtung nach einem der vorherigen Ansprüche mit einem Brushless-Regler zur Stromversorgung für die Statorwicklungen.

## Claims

1. Synchronous permanent-magnet machine having a single stator and having at least two rotors for at least two rotation speeds, wherein one rotor is provided for each rotation speed and permanent magnets with different numbers of poles are provided in each of the rotors, wherein the single stator has stator windings which extend over all the rotors, **characterized by** means for applying a rotating field at the same frequency to the armature windings.

2. Apparatus according to Claim 1, **characterized in that** at least one permanent-magnet segment and a maximum of p/2 permanent-magnet segments of the same polarity is or are replaced by segments composed of diamagnetic material or ferromagnetic material of high permeability, where p corresponds to the number of poles on the rotor.

3. Apparatus according to Claim 1 or 2 for a rotor of an external-rotor design, **characterized in that** the 2n-pole bell which is associated with the low rotation speed has a single magnet (9c) which on the one hand is connected to the soft-magnetic bell (8) which ends in n regularly offset yokes, and on the other hand rests on the lug of a soft-magnetic ring (12) which has n-1 further lugs at 360/n°, which are supported on non-magnetic support elements (13) against the inside of the bell.

4. Apparatus according to one of the preceding claims, **characterized in that** the shafts which are connected to the bells are in the form of hollow shafts (15, 16) having at least one row of holes, and **in that** means are provided for ventilation of the stator windings (4, 5, 6).

5. Apparatus according to Claim 4, **characterized in that**, in the stator yokes, the areas (1b', 2b' and 3b') in which these are stepped back have non-magnetic material on them.

6. Apparatus according to one of the preceding claims, **characterized in that** the stator yokes and the rotor magnets have a spiral shape.

7. Apparatus according to one of the preceding claims, **characterized in that** the stator is connected such that it in each case has the same absolute magnetization on its opposite side.

8. Apparatus according to one of the preceding Claims 1 to 7, **characterized in that** the stator windings are short-circuited or are connected by a low-value resistance.

9. Combination of the apparatus according to one of the preceding claims with a radial suction machine with a centrifugal separator, which separator is mounted on the low-rotation-speed side, while a radial fan impeller is mounted on the high-rotation-speed side.

10. Combination of the apparatus according to one of the preceding claims with a brushless regulator for supplying power for the stator windings.

## Revendications

1. Machine synchrone à aimants permanents ayant un stator unique et ayant au moins deux rotors pour au moins deux vitesses de rotation, dans laquelle pour chaque vitesse de rotation il y a un rotor ainsi que dans chacun des rotors des aimants permanents de nombre de pôles différent, dans laquelle le stator unique a des enroulements statoriques s'étendant sur tous les rotors, **caractérisée par** des moyens d'alimentation des enroulements d'induit en un champ tournant de même fréquence.

2. Dispositif suivant la revendication 1, **caractérisé en ce qu'**au moins un segment d'aimant permanent et au maximum p/2 segments d'aimant permanent de même polarité sont remplacés par des segments de matériau diamagnétique ou ferromagnétique de grande perméabilité, p correspondant au nombre de pôles du rotor.

3. Dispositif suivant la revendication 1 ou 2 pour un rotor en mode de construction à induit extérieur, **caractérisé en ce que** la cloche a 2n pôle, associée à la vitesse de rotation la plus petite, a un aimant (9c) unique qui est relié d'une part à la cloche (8) magnétique douce, laquelle se termine en n culasses réparties régulièrement et s'applique d'autre part à la éclisse d'un anneau (12) magnétique doux, qui a n-1 autres éclisses à 360/n°, qui s'appuient contre la face intérieure de la cloche sur des éléments (13) amagnétiques de recouvrement inférieurs.

4. Dispositif suivant l'une des revendications précédentes, **caractérisé en ce que** les arbres reliés aux cloches sont réalisés sous la forme d'arbres (15, 16) creux ayant au moins une rangée de trous et **en ce qu'**il est prévu des moyens d'aération des enroulements (4,5,6) statoriques.

5. Dispositif suivant la revendication 4, **caractérisé en ce que**, pour les culasses statoriques, les parties (1b', 2b' et 3b') dans lesquelles celles-ci sont en recul sont revêtues de matériau amagnétique.

6. Dispositif suivant l'une des revendications précédentes, **caractérisé en ce que** les culasses statoriques et les aimants rotoriques sont en forme de spirale.

7. Dispositif suivant l'une des revendications précédentes, **caractérisé en ce que** le stator est câblé de façon à avoir la même aimantation absolue respectivement sur ses côtés opposés.

8. Dispositif suivant l'une des revendications précédentes 1 à 7, **caractérisé en ce que** les enroulements statoriques sont court-circuités ou sont reliés par une résistance de petite valeur ohmique.

9. Combinaison du dispositif suivant l'une des revendications précédentes à une machine d'aspiration radiale, ayant un séparateur centrifuge qui est monté du côté à petite vitesse de rotation, tandis que la roue du ventilateur radial est monté du côté à grande vitesse de rotation.

10. Combinaison du dispositif suivant l'une des revendications précédentes à un régulateur sans balai pour l'alimentation en courant des enroulements statoriques.
